# FASCICULE DE BREVET EUROPEEN

(11) **EP 2 086 841 B1**
(45) Date de publication et mention de la délivrance du brevet: **06.01.2010**
(21) Numéro de dépôt: 07858416.6
(22) Date de dépôt: 10.10.2007
(51) Int. Cl.: B65B 43/46, B65B 43/48, B65B 5/02, B65G 25/10

(54) **DISPOSITIF DE TRANSFERT D'ÉBAUCHES DE CAISSES EN CARTON**
MASCHINE FÜR DEN TRANSFER VON ZUSCHNITTEN FÜR PAPPKARTONS
MACHINE FOR TRANSFERRING BLANKS FOR CARTONBOARD BOXES

(30) Priorité: 11.10.2006 FR 0608898
(43) Date de publication de la demande: 12.08.2009
(73) Titulaire: Sidel Participations, 76930 Octeville Sur Mer (FR)
(72) Inventeur: KOBIERZYCKI, Bernard, 76930 Octeville-sur-Mer (FR); JACOB, Pierre-Yves, 76930 Octeville-sur-Mer (FR)
(74) Mandataire: Religieux, Bernard
(86) Numéro de dépôt international: PCT/FR2007/001649
(87) Numéro de publication internationale: WO 2008/043913

(56) Documents cités:
- EP-A1- 0 761 535
- WO-A-98/32660
- DE-A1- 3 023 493
- FR-A- 2 882 727

## Description

La présente invention concerne les machines d'emballage et de conditionnement de produits divers et variés comme des bouteilles, flacons, sachets... etc.

Elle concerne plus particulièrement, sur ces machines, le dispositif de convoyage qui, après la mise en forme de la découpe, réalise le transfert de poste en poste de l'ébauche de caisse obtenue, laquelle ébauche est remplie avec les produits à conditionner puis, in fine, façonnée sous la forme d'une caisse fermée.

Selon le type de machine, le dispositif de convoyage va gérer le transfert de l'ébauche de caisse sur deux ou trois postes.

Pour une machine, que l'on peut qualifier de compacte, le nombre de postes se limite à deux : - un poste où s'effectue la mise en volume de la découpe sous forme d'ébauche de caisse et au niveau duquel s'effectue aussi le remplissage de ladite ébauche et, en aval, - un poste de pressage où ladite ébauche est transformée en véritable caisse et au-delà duquel ladite caisse est évacuée, reprise par un autre convoyeur.

Dans le cas d'une machine où chaque poste est détaillé, et qui est donc plus longue, moins compacte, on trouve : - le poste de mise en forme de la découpe, - le poste de remplissage de l'ébauche et - le poste de pressage à la suite duquel la caisse est également évacuée.

L'invention concerne le dispositif de convoyage qui permet de gérer de manière commode et pratique les différents déplacements de l'ébauche et de la caisse, de poste en poste, quel que soit le type de machine.

Pour surmonter les problèmes des dispositifs de convoyage du type à chaînes sans fin et à taquets, il a été proposé, dans le document FR 2 882 727, de transférer l'ébauche de caisse de poste en poste au moyen d'un système de pinces qui est disposé sur un chariot et ce chariot se déplace sous les différents postes. Le préambule de la revendication 1 est basé sur cet état de la technique.

Ces pinces s'ouvrent et se referment sous l'effet d'un organe de manoeuvre, du type vérin, qui est embarqué sur le chariot ; en s'ouvrant, ces pinces s'escamotent sous la sole de guidage des ébauches et, en se refermant, elles s'étendent pour partie en saillie au-dessus de ladite sole, enserrant une ébauche de caisse.

Le chariot peut comporter plusieurs jeux de pinces, deux par exemple, lorsqu'il y a plusieurs postes distincts sur la machine : -un poste de mise en forme de la découpe, - un poste de remplissage de l'ébauche et, - un poste de pressage pour façonner la caisse.

Les exigences toujours plus fortes en matière de cadences demandent des dispositifs de transfert particulièrement « agiles » et surtout très efficaces et précis.

Le dispositif détaillé précédemment représente un grand progrès par rapport aux convoyeurs à taquets. Cependant sa structure et le système de pinces génèrent une inertie importante et cette inertie est un frein pour une évolution vers des cadences élevées.

De plus, la partie saillante des pinces a une dimension relativement faible en raison de leur mode d'escamotage qui s'effectue par simple basculement. Cette faible dimension des pinces nuit à la tenue de l'ébauche pendant son transfert, surtout du côté amont où les efforts sont plus importants du fait des accélérations et aussi du fait de la résistance à vaincre pour faire progresser l'ébauche, notamment dans le poste de pressage.

Cette dimension relativement faible des parties actives des pinces a également pour conséquence de provoquer un marquage des caisses, surtout au niveau de leur partie amont.

L'invention a pour but d'améliorer les caractéristiques de ce genre de dispositif de façon à atteindre des cadences plus importantes, des cadences telles qu'elles ne constituent plus un frein à l'évolution des cadences des autres postes.

L'invention a aussi pour but d'améliorer la tenue de l'ébauche pendant tout son parcours et même de participer à sa mise en forme et au maintien de cette mise en forme sur tout le parcours de l'ébauche.

Le dispositif selon l'invention permet d'améliorer la préhension de l'ébauche et de maintenir cette dernière dans une forme précise tout au long du trajet. Cette précision de l'ébauche va avoir une influence positive sur le résultat de l'opération de pressage ; elle permet l'obtention d'une caisse parfaitement calibrée, régulière, qui ne posera pas de problèmes lors de sa palettisation notamment.

L'invention a également pour but de diminuer la consommation d'énergie nécessaire au fonctionnement du dispositif grâce à la réduction du poids des parties mobiles et grâce aussi à une utilisation originale de l'inertie des éléments en mouvement.

Le dispositif selon l'invention permet donc, d'une manière générale, d'améliorer l'efficacité et la précision de la prise en charge de l'ébauche, quelles que soient les cadences de la machine et aussi quel que soit le nombre de postes à satisfaire.

La machine d'emballage et de conditionnement de produits divers et variés selon l'invention comporte un dispositif de transfert d'ébauches et de caisses en carton qui s'étend entre le poste de mise en forme des découpes et le convoyeur d'évacuation des caisses obtenues, lequel transfert s'effectue selon un cycle qui comporte des opérations de mise en volume de la découpe en carton, de remplissage de l'ébauche obtenue et de pressage de la caisse, et ce dispositif de transfert d'ébauches consiste en un chariot qui se déplace longitudinalement sous les différents postes, sur un système de guidage constitué de rails et/ou glissières, lequel système de guidage est parallèle à la sole fixe qui s'étend sur toute la longueur desdits postes et sur laquelle progressent lesdites ébauches de caisse, lequel chariot porte, d'une part, un système de pinces constitué de bras amont et aval mobiles pour enserrer lesdites ébauches et caisses, et, d'autre part, un organe poussoir ; l'ensemble pinces-poussoir permettant de déplacer lesdites ébauches et caisses sur ladite sole fixe, puis de les pousser sur le convoyeur d'évacuation, lesquels bras amont et aval et ledit organe poussoir sont disposés sur une platine qui est mobile de bas en haut et inversement par rapport audit chariot, par des moyens appropriés, pour placer lesdits bras et ledit organe poussoir soit en position active de prise en charge de l'ébauche et de la caisse sur la sole, soit en position inactive sous le niveau de cette dernière.

Toujours selon l'invention, la hauteur de la partie saillante du bras amont est supérieure à celle du bras aval et de l'organe poussoir, lequel bras amont est articulé sur la platine et pivote sous l'effet de moyens appropriés autour d'un axe horizontal, perpendiculaire au mouvement du chariot, pour permettre, d'une part, - son escamotage vers l'amont de la machine et sous le niveau de la sole des différents postes lors du retour dudit chariot - puis sa mise en position active de prise en charge de l'ébauche lors du mouvement de transfert effectué par ledit chariot, et, d'autre part, simultanément, l'ouverture et la fermeture du système de pinces. Cet aménagement permet d'améliorer la compacité du dispositif de transfert et d'éviter les interférences avec le dispositif d'extraction des découpes qui se situe en amont.

Selon une autre disposition de l'invention, la platine est guidée par rapport au chariot par l'intermédiaire d'une glissière en forme de rampe dont l'inclinaison, par rapport au système de guidage du chariot, est de l'ordre de 45° en descendant de l'amont vers l'aval et le déplacement de ladite platine sur cette rampe est réalisé par des moyens appropriés comme, par exemple, un vérin interposé entre ladite platine et ledit chariot.

Toujours selon l'invention, le bras amont s'étend au-delà de son articulation sous la forme d'une manivelle dont l'extrémité est reliée à un point fixe du chariot au moyen d'une bielle, laquelle bielle imprime audit bras un mouvement de pivotement qui se combine avec le mouvement de montée-descente de la platine par rapport audit chariot, réalisant automatiquement la fermeture du système de pinces pendant la montée et son ouverture pendant la descente.

Selon une autre disposition de l'invention, le bras aval est disposé sur un support en forme de glissière, solidaire de la platine, lequel support s'étend parallèlement au système de guidage du chariot et il est muni de moyens pour permettre le réglage de la position dudit bras aval sur ledit support afin d'ajuster l'espace entre les parties saillantes des deux bras en fonction du format des découpes et des ébauches de caisse.

Toujours selon l'invention, l'organe poussoir de l'ébauche et de la caisse est disposé à l'extrémité du support du bras aval du système de pinces.

Selon une autre disposition de l'invention, le chariot est motorisé au moyen d'un organe moteur du type vérin, moteur linéaire ou autre : servomoteur, moteur asynchrone.

Toujours selon l'invention, lorsqu'il y a trois postes en ligne, le chariot comporte deux systèmes de pinces pour transférer simultanément les ébauches de poste en poste, et un organe poussoir situé à l'extrémité aval.

Selon une variante de réalisation, une même machine peut comporter plusieurs chariots, chaque chariot étant muni d'un système de pinces et, pour le chariot aval, d'un organe poussoir afin de gérer les déplacements des ébauches de caisse et les caisses entre deux postes consécutifs et, in fine, de pousser les caisses sur le convoyeur d'évacuation.

Mais l'invention sera encore détaillée à l'aide de la description suivante et des dessins annexés, donnés à titre indicatif, et dans lesquels :
- la figure 1 est une vue schématique d'une machine équipée d'un dispositif de convoyage selon l'invention ;
- la figure 2 montre le détail du dispositif de convoyage sous forme de schéma fonctionnel, dans une position qui correspond à la position active de prise en charge d'une ébauche de caisse par le système de pinces ;
- la figure 3 montre le dispositif de convoyage avec le système de pinces en position inactive.

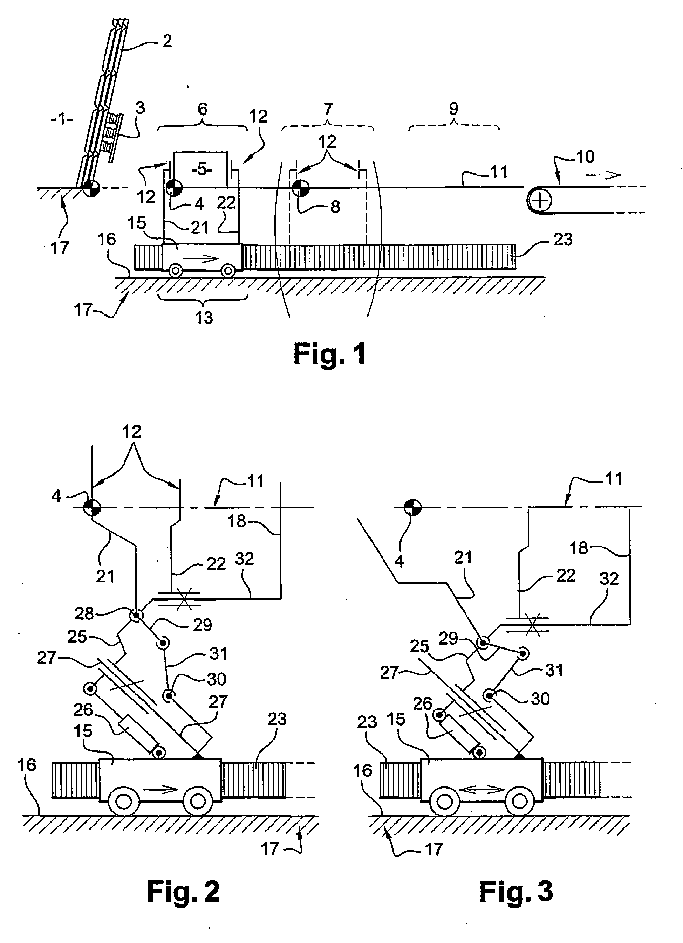

La machine esquissée figure 1 comporte un magasin (1) dans lequel sont stockées des découpes (2). Ces découpes (2) sont prélevées, de façon classique, par un bras (3) d'extraction et elles sont placées dans un référentiel (4) pour être mises en volume, sous forme d'ébauches (5) de caisse, au poste (6) de mise en forme.

Cette machine peut être équipée pour façonner des découpes (2) du type « caisse américaine » ou du type « wrap around ». Les moyens de façonnage ne sont pas représentés.

Après sa mise en volume, l'ébauche (5) peut être remplie immédiatement avec les produits à conditionner ; cette opération de remplissage peut s'effectuer au poste (6) de mise en forme ou, comme représentée sur la figure, entre parenthèses, au niveau d'un poste (7) spécifique qui est disposé juste après ledit poste (6) de mise en forme.

Au niveau de ce poste (7) de remplissage, l'ébauche est placée également dans un référentiel (8).

Après le remplissage, l'ébauche passe au poste (9) de pressage où elle est transformée en véritable caisse et elle est ensuite évacuée par le biais d'un convoyeur (10) approprié.

Pendant toutes ces opérations, l'ébauche (5) est déplacée sur une sole (11) continue, horizontale, qui s'étend du poste (6) de mise en forme jusqu'au poste (9) de pressage, c'est-à-dire qu'elle s'étend entre le magasin (1) et le convoyeur (10) d'évacuation. Cette sole (11) est fixe; elle est constituée de guides disposés latéralement, pour permettre, d'une part, le passage du bras (3) extracteur et, d'autre part, le passage du système de pinces (12) qui prend en charge l'ébauche (5).

L'invention concerne principalement le dispositif (13) de convoyage qui permet, au moyen du système de pinces (12), de prendre en charge l'ébauche (5) de caisse au poste (6) de mise en forme et de déplacer cette ébauche (5) de poste en poste, sur la sole (11), jusqu'au poste (9) de pressage après lequel elle est poussée sur le convoyeur (10) d'évacuation.

Le dispositif (13) de convoyage esquissé figure 1 comprend, disposé sous la sole (11), un chariot (15) motorisé ; ce chariot (15) est mobile longitudinalement sur un système (16) de guidage qui est constitué de rails et/ou de glissières solidaires du bâti (17) de la machine.

Le chariot (15) porte le système de pinces (12) ainsi qu'un organe poussoir (18), non représenté figure 1 pour des questions de clarté ; cet organe poussoir (18), qui est constitué de deux bras disposés côte à côte, sur une transversale, apparaît sur les figures 2 et 3.

Le système de pinces (12) est constitué de bras qui enserrent l'ébauche (5) au niveau d'endroits qui correspondent aux coins de ce qui deviendra la caisse : deux bras (21) pour la face amont de ladite caisse et deux bras (22) pour la face aval.

Ces couples de bras (21, 22) déplacent l'ébauche (5) de poste en poste sur la sole (11) et ils sont disposés entre les guides latéraux qui constituent ladite sole (11) ; les poussoirs (18) prennent le relais pour pousser l'ébauche et évacuer la caisse selon le cas.

Le chariot (15) est mobile sous la sole (11) au moyen d'un organe moteur qui peut être constitué d'un vérin ou autre, c'est-à-dire un servomoteur ou encore un moteur asynchrone.

Sur la figure 1, l'organe moteur est constitué d'un moteur linéaire. Ce moteur linéaire comprend un primaire, avec une alimentation électrique, qui est disposé sur le chariot (15) et un secondaire constitué d'aimants (23), qui est associé au système (16) de guidage dudit chariot (15).

Ce type d'organe moteur permet de réaliser des mouvements rapides, précis ; il est compact et il ne requiert pas d'entretien. De plus, sur le plan de la sécurité, il présente des avantages très nets ; il permet en effet, compte tenu du contrôle continu du couple, de stopper très rapidement le mouvement du chariot (15) ou même d'empêcher son mouvement si un obstacle, ou autre, est présent.

La figure 2 montre le dispositif de convoyage sous forme de schéma fonctionnel, en position active de prise en charge d'une ébauche (5) de caisse.

Ce dispositif comprend donc: - le chariot (15) posé sur le système (16) de guidage, - le système de pinces (12) qui est constitué des bras (21) amont et des bras (22) aval, et - les poussoirs (18) ; ces bras (21, 22) et poussoirs (18) sont portés par ledit chariot (15) par l'intermédiaire d'une platine (25) ; cette platine (25) est mobile par rapport audit chariot (15) pour permettre la mise en position active desdits bras (21, 22) et poussoirs (18) et en particulier de leurs extrémités supérieures, ou leur mise en position inactive par escamotage sous le niveau de la sole (11).

La platine (25) est mobile sous l'effet d'un vérin (26), par exemple, qui est ancré sur le chariot (15) et elle se déplace sur une glissière en forme de rampe (27) qui est solidaire dudit chariot (15). Cette rampe (27) est inclinée selon un angle de l'ordre de 45° par rapport au système (16) de guidage du chariot (15) ; elle est inclinée vers le bas en allant de l'amont vers l'aval de la machine.

Le couple de bras (21) amont est articulé sur la platine (25) autour d'un axe (28) qui est horizontal et transversal, c'est-à-dire perpendiculaire au système (16) de guidage du chariot (15) ; cet axe (28) se situe au-dessus de la rampe (27).

Le couple de bras (21) amont pivote automatiquement lorsque la platine (25) est manoeuvrée par le vérin (26). En effet, ce couple de bras (21) amont comporte, située à l'opposé de son extrémité supérieure faisant office de mors, par rapport à l'axe (28), une manivelle (29) qui est reliée à un point (30) fixe du chariot (15) par l'intermédiaire d'une bielle (31).

Le mouvement de la platine (25) provoque, comme montré figure 3, le pivotement des bras (21) amont ; ce pivotement, combiné au mouvement de descente de la platine (25), permet l'escamotage desdits bras (21) amont sous le niveau de la sole (11) et, à l'inverse, le mouvement de remontée de la platine (25) provoque la mise en position active de l'extrémité de ces bras (21) amont, au-dessus du niveau de ladite sole (11).

Ce montage original des bras (21) amont permet de disposer de bras dont la partie active en saillie au-dessus de la sole (11) est relativement importante, plus importante que celle des bras (22) aval. La hauteur de la partie active des bras (21) amont peut être de l'ordre de deux fois, au moins, la hauteur de la partie saillante des bras (22) aval. On obtient une meilleure prise en charge de l'ébauche par le système de pinces ; la surface de contact entre la partie active des bras (21) amont est importante, ce qui évite des déformations de l'ébauche (5) de caisse au niveau de la zone de contact.

Lorsque le chariot (15) arrive sous le poste (6) de mise en forme, la platine (25) s'élève pour placer les bras (21, 22) et les poussoirs (18) en position active ; lors de cette opération, les bras (21) amont pivotent en même temps que leurs parties actives s'élèvent et ces parties actives font saillie au-dessus du niveau de la sole (11) ; dans le même temps, les parties actives des bras (22) aval et les poussoirs (18) s'élèvent aussi et font saillie également au-dessus du niveau de ladite sole (11).

Les bras (21) amont et les bras (22) aval forment un système de pinces (12) qui se referme sur l'ébauche (5), au poste de mise en forme de la découpe (2). Ce système de pinces (12) se referme à la fin de la course retour du chariot (15) et il s'ouvre à la fin de la course aller, c'est-à-dire à la fin du transfert au niveau du poste (9) de pressage.

Compte-tenu de l'inclinaison de la rampe (27) de guidage de la platine (25), l'inertie de cette platine (25), avec le système de pinces (12), joue un rôle moteur pour l'ouverture et la fermeture dudit système de pinces (12) et permet de choisir un vérin (26) de manoeuvre relativement modeste.

Le couple de bras (22) aval est solidaire de la platine (25) par l'intermédiaire d'un support (32) en forme de glissière qui permet de régler et d'adapter sa position longitudinale, par rapport au couple de bras (21), en fonction des dimensions des découpes (2) et des ébauches (5). Ce support (32) s'étend parallèlement au système (16) de guidage du chariot (15) et il comporte, à son extrémité aval, le couple de poussoirs (18), lesquels poussoirs (18) sont fixes, sur la platine (15).

La distance entre les poussoirs (18) et les bras (21) amont, lorsqu'ils sont en position active, correspond à la distance maximum entre les bras (21), (22), augmentée de quelques centimètres, de 5 à 10 cm, par exemple.

Les poussoirs (18) s'intercalent entre deux postes adjacents et ils prennent la caisse au vol pour la placer sur le convoyeur (10) d'évacuation, sans déborder exagérément de la sole (11).

Les couples de bras (21, 22) et poussoirs (18) sont réglables, transversalement, pour s'adapter aux différents formats des découpes (2) et des ébauches (5) de caisse, par des moyens appropriés, non représentés.

La simplicité du dispositif (13) de convoyage permet d'envisager d'installer une paire de systèmes de pinces (12) suivie de poussoirs (18), sur un même chariot (15) de façon à transférer simultanément une paire d'ébauches (5) dans le cas de machines d'emballage et de conditionnement qui comportent trois postes : un poste (6) de mise en forme des découpes (2), un poste (7) où s'effectue le remplissage de l'ébauche (5) de caisse et, un poste (9) de pressage où lesdites ébauches (5) se transforment en véritables caisses. La distance entre ces systèmes de pinces est égale au pas établi entre les différents postes.

Ce transfert peut également, selon les caractéristiques de la machine d'emballage et de conditionnement et, notamment, selon le pas entre les différents postes, s'effectuer au moyens de plusieurs chariots (15) comportant chacun un système de pinces (12) et, pour le chariot aval, les poussoirs (18).

## Revendications

1. Dispositif de transfert d'ébauches de caisses en carton pour des machines d'emballage et de conditionnement, lequel dispositif s'étend entre le poste (6) de mise en forme des découpes (2) et le convoyeur (10) d'évacuation des caisses obtenues, lequel transfert s'effectue selon un cycle qui comporte des opérations de mise en volume de la découpe (2) en carton, de remplissage de l'ébauche (5) de caisse obtenue et de pressage de ladite ébauche pour la transformer en caisse,
lequel dispositif comprend un chariot (15) qui se déplace longitudinalement sous les différents postes sur un système (16) de guidage constitué de rails et/ou glissières, lequel système (16) de guidage est parallèle à la sole (11) qui s'étend sur toute la longueur desdits postes et sur laquelle progresse ladite ébauche (5) de caisse, lequel chariot (15) porte, d'une part, un système de pinces (12) constitué de bras (21) amont et de bras (22) aval mobiles pour enserrer lesdites ébauches (5) et caisses, et, d'autre part, un organe poussoir (18), l'ensemble pinces-poussoir permettant de déplacer lesdites ébauches et caisses sur ladite sole (11), puis de les pousser sur ledit convoyeur (10) d'évacuation,
**caractérisé en ce que** les bras (21, 22), respectivement amont et aval, sont disposés par couples sur une platine (25) qui est mobile verticalement par rapport audit chariot (15), par des moyens appropriés, pour placer lesdits bras (21, 22) soit en position active de prise en charge de l'ébauche (5) lorsqu'elle est façonnée sur ladite sole (11) au poste (6) de mise en forme, soit en position inactive sous le niveau de ladite sole (11) après avoir libéré ladite caisse au poste (9) de pressage.

2. Dispositif de transfert d'ébauches de caisses en carton selon la revendication 1, **caractérisé en ce que** la hauteur de la partie saillante des bras (21) amont est supérieure à celle des bras (22) aval et des poussoirs (18), lesquels bras (21) amont sont articulés sur la platine (25) et pivotent, sous l'effet de moyens appropriés, autour d'un axe (28) horizontal, perpendiculaire au mouvement du chariot (15), pour permettre - son escamotage vers l'amont de la machine et sous le niveau de la sole (11) des différents postes lors du retour dudit chariot (15) - puis sa mise en position active de prise en charge de l'ébauche (5) lors du mouvement de transfert effectué par ledit chariot (15).

3. Dispositif de transfert d'ébauches de caisses en carton selon la revendication 2, **caractérisé en ce que** la platine (25) est guidée par rapport au chariot (15) par l'intermédiaire d'une glissière en forme de rampe (27) dont l'inclinaison, par rapport au système (16) de guidage dudit chariot (15), est de l'ordre de 45° en descendant de l'amont vers l'aval de la machine et le déplacement de ladite platine (25) sur cette rampe (27) est réalisé par des moyens appropriés comme, par exemple, un vérin (26) interposé entre ladite platine (25) et ledit chariot (15).

4. Dispositif de transfert d'ébauches de caisses en carton selon la revendication 3, **caractérisé en ce que** le couple de bras (21) amont s'étend au-delà de son axe (28) d'articulation sous la forme d'une manivelle (29) dont l'extrémité est reliée à un point (30) fixe du chariot (15) au moyen d'une bielle (31), laquelle bielle (31) imprime audit couple de bras (21) amont un mouvement de pivotement qui se combine avec le mouvement de montée-descente de la platine (25) par rapport audit chariot (15).

5. Dispositif de transfert d'ébauches de caisses en carton selon la revendication 4, **caractérisé en ce que** le couple de bras (22) aval est disposé sur un support (32) en forme de glissière solidaire de la platine (25), lequel support (32) s'étend parallèlement au système (16) de guidage du chariot (15) et il est muni de moyens pour permettre le réglage de la position dudit couple de bras (22) aval sur ledit support (32) afin d'ajuster l'espace entre les parties saillantes des deux couples de bras (21, 22) en fonction du format des découpes (2) et des ébauches (5) de caisse.

6. Dispositif de transfert d'ébauches de caisses en carton selon la revendication 5, **caractérisé en ce que** l'organe poussoir (18) est disposé à l'extrémité du support (32) qui sert de glissières aux bras (22) aval.

7. Dispositif de transfert d'ébauches de caisses en carton selon l'une quelconque des revendications 1 à 6, **caractérisé en ce que** le chariot (15) est motorisé au moyen d'un organe moteur du type vérin.

8. Dispositif de transfert d'ébauches de caisses en carton selon l'une quelconque des revendications 1 à 6, **caractérisé en ce que** le chariot (15) est motorisé au moyen d'un organe moteur du type moteur linéaire comportant un primaire disposé sur ledit chariot (15) et un secondaire associé au système (16) de guidage de ce dernier.

9. Dispositif de transfert d'ébauches de caisses en carton selon l'une quelconque des revendications 1 à 8, **caractérisé en ce qu'**il comporte, lorsqu'il y a trois postes en ligne sur la machine d'emballage et de conditionnement, c'est-à-dire un poste (6) de mise en forme, un poste (7) de remplissage et un poste (9) de pressage, un chariot (15) équipé de deux systèmes de pinces (12) et d'un organe poussoir (18), pour transférer simultanément les ébauches (5) de poste en poste.

10. Dispositif de transfert d'ébauches de caisses en carton selon l'une quelconque des revendications 1 à 8, **caractérisé en ce qu'**il comporte, lorsqu'il y a trois postes en ligne sur la machine d'emballage et de conditionnement, c'est-à-dire un poste (6) de mise en forme, un poste (7) de remplissage et un poste (9) de pressage, deux chariots munis chacun d'un système de pinces (12) et, pour le chariot aval, d'un organe poussoir (18) afin de gérer les déplacements des ébauches (5) de caisse entre deux postes consécutifs.

## Claims

1. Device for transferring cardboard box blanks for wrapping and packaging machines, which device extends between the station (6) for forming the cutouts (2) and the conveyor (10) for removing the boxes obtained, which transfer is carried out according to a cycle that comprises operations of erecting the cardboard cutout (2), filling the box blank (5) obtained and pressing said blank in order to transform it into a box,
which device includes a carriage (15) that moves longitudinally under the various stations, on a guide system (16) consisting of tracks and/or slides, which guide system (16) is parallel to the soleplate (11) that extends over the entire length of said stations and on which said box blank (5) advances, which carriage (15) has a clamp system (12) consisting of mobile upstream (21) and downstream (22) arms for gripping said blanks (5) and boxes, and a push member (18), in which the clamp-push member assembly enables said blanks and boxes to be moved on said soleplate (11), then pushed onto said removal conveyor (10),
**characterized in that** the upstream and downstream arms (21, 22), respectively, are arranged in pairs on a plate (25) that is vertically mobile with respect to said carriage (15), by suitable means, in order to move said arms (21, 22) either into the active position for handling the blank (5) when it is assembled on said soleplate (11) at the forming station (6), or into the inactive position below said soleplate (11) after said box has been released at the pressing station (9).

2. Device for transferring cardboard box blanks according to claim 1, **characterized in that** the height of the projecting portion of the upstream arms (21) is greater than that of the downstream arms (22) and push members (18), which upstream arms (21) are pivotably connected to the plate (25) and pivot, under the effect of suitable means, about a horizontal shaft (28), perpendicular to the movement of the carriage (15), to enable: - its retraction upstream of the machine and below the soleplate (11) of the various stations when said carriage returns (15), - then its active positioning for handling the blank (5) during the transfer movement performed by said carriage (15).

3. Device for transferring cardboard box blanks according to claim 2, **characterized in that** the plate (25) is guided with respect to the carriage (15) by means of a slide in the form of a ramp (27), of which the tilt, with respect to the system (16) for guiding said carriage (15), is on the order of 45° descending from upstream to downstream of the machine, and the movement of said plate (25) on this ramp (27) is performed by suitable means such as, for example, an actuator (26) placed between said plate (25) and said carriage (15).

4. Device for transferring cardboard box blanks according to claim 3, **characterized in that** the pair of upstream arms (21) extends beyond its pivot shaft (28) in the form of a crank (29) of which the end is connected to a stationary point (30) of the carriage (15) by means of a connecting rod (31), which connecting rod (31) imparts, on said pair of upstream arms (21), a pivoting movement that is combined with the rising-falling movement of the plate (25) with respect to said carriage (15).

5. Device for transferring cardboard box blanks according to claim 4, **characterized in that** the pair of downstream arms (22) is arranged on a slide-type support (32) secured to the plate (25), which support (32) extends parallel to the system (16) for guiding the carriage (15), and it is equipped with means for enabling the adjustment of the position of said pair of downstream arms (22) on said support (32) so as to adjust the space between the projecting portions of the two pairs of arms (21, 22) according to the format of the cutouts (2) and the box blanks (5).

6. Device for transferring cardboard box blanks according to claim 5, **characterized in that** the push member (18) is arranged at the end of the support (32), which serves as slides for the downstream arms (22).

7. Device for transferring cardboard box blanks according to any one of claims 1 to 6, **characterized in that** the carriage (15) is powered by means of an actuator-type motor.

8. Device for transferring cardboard box blanks according to any one of claims 1 to 6, **characterized in that** the carriage (15) is powered by means of a linear motor-type drive member, comprising a primary winding arranged on said carriage (15) and a secondary winding associated with the system (16) for guiding the latter.

9. Device for transferring cardboard box blanks according to any one of claims 1 to 8, **characterized in that** it comprises, when there are three stations in line on the wrapping and packaging machine, i.e. a forming station (6), a filling station (7) and a pressing station (9), a carriage (15) equipped with two clamp systems (12) and a push member (18), for simultaneously transferring the blanks (5) from station to station.

10. Device for transferring cardboard box blanks according to any one of claims 1 to 8, **characterized in that** it comprises, when there are three stations in line on the wrapping and packaging machine, i.e. a forming station (6), a filling station (7) and a pressing station (9), two carriages each equipped with a clamp system (12), and, for the downstream carriage, a push member (18) so as to manage the movements of the box blanks (5) between two consecutive stations.

## Patentansprüche

1. Transportvorrichtung für Pappschachtelvorformen für Einpack- und Verpackungsmaschinen, wobei sich die Vorrichtung zwischen der Station (6) für die Formgebung der Zuschnitte (2) und der Fördereinrichtung (10) für den Abtransport der erhaltenen Schachteln erstreckt, wobei der Transport in einem Zyklus erfolgt, der die Schritte des Aufrichtens des Pappzuschnitts (2), des Befüllens der Schachtelvorform (5) und des Zusammendrückens der Vorform zur Umwandlung in eine Schachtel umfasst,
wobei die Vorrichtung einen Schlitten (15) umfasst, der sich längs unter den verschiedenen Stationen auf einem aus Schienen und/oder Gleitflächen gebildeten Führungssystem (16) bewegt, wobei das Führungssystem (16) parallel zur Auflageplatte (11) verläuft, die sich über die gesamte Länge der Stationen erstreckt und auf der sich der Schachtelvorform (5) fortbewegt, wobei der Schlitten (15) einerseits ein Greifersystem (12) trägt, das aus vorgelagerten Armen (21) und nachgelagerten Armen (22) gebildet ist, die beweglich sind, um die Vorformen (5) und Schachteln zu umschließen, und andererseits ein Ausstoßelement (18), wobei die Vorformen und Schachteln mit der Einheit aus Greifern und Ausstoßelement auf der Auflageplatte (11) bewegt und anschließend auf die Fördereinrichtung (10) für den Abtransport geschoben werden können, **dadurch gekennzeichnet, dass** die entsprechenden vorgelagerten und nachgelagerten Arme (21, 22) paarweise auf einer Platte (25) angeordnet sind, die mit geeigneten Mitteln vertikal zum Schlitten (15) beweglich ist, um die Arme (21, 22) entweder in die aktive Stellung des Aufnehmens der Vorform (5) zu bringen, wenn sie auf der Auflageplatte (11) an der Station (6) für die Formgebung ihre Form erhält, oder in eine inaktive Stellung unter der Ebene der Auflageplatte (11), nachdem die Schachtel an der Pressstation (9) weggeschoben wurde.

2. Transportvorrichtung für Pappschachtelvorformen nach Anspruch 1, **dadurch gekennzeichnet, dass** die Höhe des vorstehenden Abschnitts der vorgelagerten Arme (21) die der nachgelagerten Arme (22) und der Ausstoßelemente (18) übertrifft, wobei die vorgelagerten Arme (21) gelenkig mit der Platte (25) verbunden sind und sich unter Einwirkung geeigneter Mittel rechtwinklig zur Bewegung des Schlittens (15) um einen horizontale Bolzen (28) drehen, damit sie
- bei der Rückkehr des Schlittens (15) in den vorgelagerten Bereich der Maschine und unter die Ebene der Auflageplatte (11) der verschiedenen Stationen geklappt werden können
- und anschließend während der vom Schlitten (15) durchgeführten Transportbewegung in die aktive Stellung des Aufnehmens der Vorform (5) gebracht werden können.

3. Transportvorrichtung für Pappschachtelvorformen nach Anspruch 2, **dadurch gekennzeichnet, dass** die Platte (25) über eine Gleitfläche in Form einer Schräge (27) relativ zum Schlitten (15) geführt wird, deren Neigung zum Führungssystem (16) für den Schlitten (15), vom vorgelagerten Bereich zum nachgelagerten Bereich der Maschine hinunter, etwa 45° beträgt und wobei die Bewegung der Platte (25) auf dieser Schräge (27) mit geeigneten Mitteln, beispielsweise einem Zylinder (26), erreicht wird, der zwischen der Platte (25) und dem Schlitten (15) angeordnet ist.

4. Transportvorrichtung für Pappschachtelvorformen nach Anspruch 3, **dadurch gekennzeichnet, dass** das Paar der vorgelagerten Arme (21) nach dem Gelenkbolzen (28) in Form einer Kurbel (29), deren Ende mit Hilfe einer Kurbelstange (31) mit einem Festpunkt (30) des Schlittens (15) verbunden ist, weitergeht, wobei die Kurbelstange (31) das Paar der vorgelagerten Arme (21) in eine Schwenkbewegung versetzt, die mit der Auf- und Abbewegung der Platte (25) relativ zum Schlitten (15) einhergeht.

5. Transportvorrichtung für Pappschachtelvorformen nach Anspruch 4, **dadurch gekennzeichnet, dass** das Paar der nachgelagerten Arme (22) auf einem Support (32) in Form einer Gleitfläche angeordnet ist, die fest mit der Platte (25) verbunden ist, wobei der Support (32) parallel zum Führungssystem (16) für den Schlitten (15) verläuft und mit Mitteln versehen ist, mit denen die Position des Paars der nachgelagerten Arme (22) auf dem Support (32) angepasst werden kann, um den Zwischenraum zwischen den vorstehenden Abschnitten der beiden Paare der Arme (21, 22) je nach Format der Schachtelzuschnitte (2) und der Schachtelvorformen (5) einzustellen.

6. Transportvorrichtung für Pappschachtelvorformen nach Anspruch 5, **dadurch gekennzeichnet, dass** das Ausstoßelement (18) am Ende des Supports (32) angeordnet ist, der für die nachgelagerten Arme (22) als Gleitfläche dient.

7. Transportvorrichtung für Pappschachtelvorformen nach einem der Ansprüche 1 bis 6, **dadurch gekennzeichnet, dass** der Schlitten (15) mithilfe eines Zylinders als Motorelement motorisch angetrieben wird.

8. Transportvorrichtung für Pappschachtelvorformen nach einem der Ansprüche 1 bis 6, **dadurch gekennzeichnet, dass** der Schlitten (15) mit Hilfe eines als Motorelement ausgebildeten Linearmotors angetrieben wird, der ein am Schlitten (15) angeordnetes Primärteil und ein mit dem Führungssystem (16) des letzteren in Verbindung stehendes Sekundärteil umfasst.

9. Transportvorrichtung für Pappschachtelvorformen nach einem der Ansprüche 1 bis 8, **dadurch gekennzeichnet, dass**, wenn die Einpack- und Verpackungsmaschine drei Stationen in einer Reihe besitzt, das heißt eine Station (6) für die Formgebung, eine Befüllstation (7) und eine Pressstation (9), sie einen Schlitten (15) umfasst, der mit zwei Greifersystemen (12) und einem Ausstoßelement (18) ausgestattet ist, um die Vorformen (5) gleichzeitig von Station zu Station zu transportieren.

10. Transportvorrichtung für Pappschachtelvorformen nach einem der Ansprüche 1 bis 8, **dadurch gekennzeichnet, dass**, wenn die Einpack- und Verpackungsmaschine drei Stationen in einer Reihe besitzt, das heißt eine Station (6) für die Formgebung, eine Befüllstation (7) und eine Pressstation (9), sie zwei Schlitten umfasst, die jeweils mit einem Greifersystem (12) ausgestattet sind, und wobei der nachgelagerte Schlitten mit einem Ausstoßelement (18) versehen ist, um die Schachtelvorformen (5) zwischen zwei aufeinander folgenden Stationen zu bewegen.
